(19) **Europäisches Patentamt**
**European Patent Office**
**Office européen des brevets**

(11) **EP 1 243 079 B1**

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(21) Anmeldenummer: **00988630.0**

(22) Anmeldetag: **18.11.2000**

(51) Int Cl.:
**H04B 1/707** *(2006.01)*

(86) Internationale Anmeldenummer:
**PCT/DE2000/004081**

(87) Internationale Veröffentlichungsnummer:
**WO 2001/047139 (28.06.2001 Gazette 2001/26)**

(54) **VERFAHREN FÜR DIE ÜBERTRAGUNG VON DATENSIGNALEN ZWISCHEN EINER SENDESTATION UND MEHREREN EMPFANGSSTATIONEN, SENDESTATION UND EMPFANGSSTATION**

METHOD FOR TRANSMITTING DATA SIGNALS BETWEEN A MASTER STATION AND A PLURALITY OF SLAVE STATIONS, MASTER STATION AND SLAVE STATION

PROCEDE POUR LA TRANSMISSION DE SIGNAUX DE DONNEES ENTRE UN EMETTEUR ET PLUSIEURS RECEPTEURS, EMETTEUR ET RECEPTEUR

(84) Benannte Vertragsstaaten:
**DE ES FR GB IT**

(30) Priorität: **21.12.1999 DE 19961594**

(43) Veröffentlichungstag der Anmeldung:
**25.09.2002 Patentblatt 2002/39**

(73) Patentinhaber: **ROBERT BOSCH GMBH**
**70442 Stuttgart (DE)**

(72) Erfinder:
• **KOWALEWSKI, Frank**
**38228 Salzgitter (DE)**
• **MANGOLD, Peter**
**30173 Hannover (DE)**

(56) Entgegenhaltungen:
**DE-A- 19 818 215**

• **G J R POVEY ET AL: "TDD-CDMA Extension to FDD-CDMA Based third Generation Cellular System" SAN DIEGO, 12 - 16. OCT. 1997,NEW YORK, IEEE,US, Bd. CONF. 6, 1997, Seiten 813-817, XP002138091 ISBN: 0-7803-3777-8**

• **JI-BING WANG ET AL: "A novel multipath diversity scheme in TDD-CDMA systems" RAWCON 99. 1999 IEEE RADIO AND WIRELESS CONFERENCE (CAT. NO.99EX292), RAWCON 99. 1999 IEEE RADIO AND WIRELESS CONFERENCE, DENVER, CO, USA, 1-4 AUG. 1999, Seiten 77-79, XP002164685 1999, Piscataway, NJ, USA, IEEE, USA ISBN: 0-7803-5454-0**

• **JI-BING WANG ET AL: "Novel multiuser interference canceling scheme in the downlink of TDD-CDMA systems" FIFTH ASIA-PACIFIC CONFERENCE ON COMMUNICATIONS AND FOURTH OPTOELECTRONICS AND COMMUNICATIONS CONFERENCE. APCC/ OECC'99. PROCEEDINGS. CONFERENCE - VITALITY TO THE NEW CENTURY (IEEE CAT. NO. 99EX379), PROCEEDINGS OF APCC/OECC'99 - 5TH ASIA PACIFIC CONFE, Seiten 666-669 vol.1, XP002164686 1999, Beijing, China, Beijing Univ. Posts & Telecommun, China**

• **ESMAILZADEH R ET AL: "PreRAKE diversity combining in time-division duplex CDMA mobile communications" IEEE TRANSACTIONS ON VEHICULAR TECHNOLOGY, MAY 1999, IEEE, USA, Bd. 48, Nr. 3, Seiten 795-801, XP002164687 ISSN: 0018-9545**

**Beschreibung**

Stand der Technik

Die Erfindung geht von einem Verfahren für die Übertragung von Datensignalen zwischen einer Sendestation und mehreren Empfangsstationen, von einer Sendestation und einer Empfangsstation nach der Gattung der unabhängigen Ansprüche aus.

Aus der Deutschen Patentanmeldung DE 198 18 215 A ist bereits ein Verfahren für die Übertragung von Signalen zwischen einer Basisstation und mehreren Mobilstationen über Funkkanäle bekannt, wobei die Daten unterschiedlicher Mobilstationen mit unterschiedlichen Codes gespreizt werden. In einem Modulator wird eine Vorentzerrung der zu übertragenden Signale vorgenommen. Bei der Vorentzerrung werden die Übertragungseigenschaften aller Funkkanäle und alle unterschiedlichen Codes berücksichtigt.

Vorteile der Erfindung

Das erfindungsgemäße Verfahren, die erfindungsgemäße Sendestation und die erfindungsgemäße Empfangsstation mit den Merkmalen der unabhängigen Ansprüche haben demgegenüber den Vorteil, daß die zu übertragenden Datensignale in der Sendestation durch Filterung vorentzerrt werden. Auf diese Weise stellt die Vorentzerrung einen Teil des Übertragungskanals von der Sendestation zur Empfangsstation dar, so daß eine Entzerrung der zu übertragenden vorentzerrten Datensignale in der Empfangsstation ermöglicht wird. Vor allem bei schnellen Änderungen der Eigenschaften des Übertragungskanals kann somit durch Entzerrung in der Empfangsstation eine fehlerhafte Vorentzerrung ausgeglichen werden, die den Änderungen der Eigenschaften des Übertragungskanals nicht mehr schnell genug nachgeführt werden kann.

Durch die in den Unteransprüchen aufgeführten Maßnahmen sind vorteilhafte Weiterbildungen und Verbesserungen des Verfahrens, der Sendestation und der Empfangsstation gemäß den unabhängigen Ansprüchen möglich.

Besonders vorteilhaft ist es, daß zumindest mit einem Teil der Datensignale Referenzsignale zu den verschiedenen Empfangsstationen übertragen und vor ihrer Übertragung in gleicher Weise wie die Datensignale gefiltert werden. Auf diese Weise lassen sich Referenzsignale mit derselben Vorentzerrung von der Sendestation zur entsprechenden Empfangsstation übertragen wie die Datensignale, so daß in der entsprechenden Empfangsstation eine Kanalschätzung unter Berücksichtigung der Vorentzerrung anhand der empfangenen Referenzsignale durchgeführt werden kann. Auf diese Weise kann man vor allem bei schnellen Kanaländerungen eine Nachentzerrung in der Empfangsstation realisieren, wenn die Vorentzerrung in der Sendestation nicht mehr vollständig an die neuen Kanaleigenschaften angepaßt ist.

Besonders vorteilhaft ist es, daß die Datensignale und die Referenzsignale durch ein gemeinsames Filter vorentzerrt werden. Auf diese Weise wird dieselbe Vorentzerrung für die Datensignale und die Referenzsignale sichergestellt und gleichzeitig Aufwand und Zeit für die Vorentzerrung eingespart, da keine separate Vorentzerrung für die Referenzsignale erforderlich ist.

Vorteilhaft ist auch, daß für eine erste Empfangsstation ein eigenes Referenzsignal übertragen wird. Auf diese Weise läßt sich aus den bei der ersten Empfangsstation empfangenen Referenzsignalen das dem Funkkanal von der Sendestation zur ersten Empfangsstation zugeordnete Referenzsignal durch Korrelationsempfang detektieren, so daß die Empfangsstation auf dieses Referenzsignal synchronisieren kann. Dabei werden für die Synchronisation die HF-Übertragungseigenschaften in der Rückwärtsübertragungsstrecke von der Empfangsstation zur Sendestation aufgrund der Vorentzerrung des Referenzsignals, die ja auf der Kanalschätzung der Rückwärtsübertragungsstrecke basiert, mitberücksichtigt.

Besonders vorteilhaft ist es, daß zumindest ein Teil der Datensignale nach ihrer Filterung und vor ihrer Übertragung um mindestens eine Komponente verkürzt wird. Dadurch werden Interferenzen zwischen aufeinanderfolgenden Bursts bei der Übertragung der Datensignale verhindert.

Besonders vorteilhaft ist es, daß bei der ersten Empfangsstation geprüft wird, ob die Datensignale über mehrere Wege empfangen wurden, daß in diesem Fall ein Verfahren zur Entzerrung und Entspreizung der empfangenen Datensignale, insbesondere mittels eines Rake-Empfängers oder eines Joint Detection Verfahrens, angewendet wird und daß andernfalls eine Datendetektion lediglich durch Entspreizung, insbesondere mittels eines zweiten Korrelationsempfängers, durchgeführt wird. Auf diese Weise ist es möglich, die Datendetektion in der entsprechenden Empfangsstation auch bei Empfang bereits in der Sendestation vorentzerrter Signale an unterschiedliche sich mit der Zeit ändernde Eigenschaften des Funkkanals von der Sendestation zur entsprechenden Empfangsstation anzupassen, insbesondere dann, wenn aufgrund schneller Änderungen dieser Eigenschaften die Vorentzerrung nicht mehr aktuell ist. In diesem Fall kann die Detektion aufwendiger gestaltet werden und um eine Entzerrung erweitert werden, so daß weiterhin keine Einbußen in der Empfangsqualität bei der entsprechenden Empfangsstation hinzunehmen sind.

Durch die Prüfung auf Mehrwegempfang in der ersten Empfangsstation ist eine Signalisierung seitens der Sendestation nicht erforderlich, welche Art der Datendetektion in der ersten Empfangsstation vorzunehmen ist.

Zeichnung

Ein Ausführungsbeispiel der Erfindung ist in der Zeichnung dargestellt und in der nachfolgenden Beschreibung näher erläutert. Es zeigen Figur 1 ein Blockschaltbild einer erfindungsgemäßen Sendestation und einer erfindungsgemäßen Empfangsstation, Figur 2 einen Ablaufplan des erfindungsgemäßen Verfahrens, Figur 3 den zeitlichen Aufbau eines Bursts, Figur 4 ein Leistungs-Zeit-Diagramm zur Auswertung des Funkkanals von der Sendestation zur Empfangsstation und Figur 5 den allgemeinen Aufbau eines Mobilfunksystems.

Beschreibung des Ausführungsbeispiels

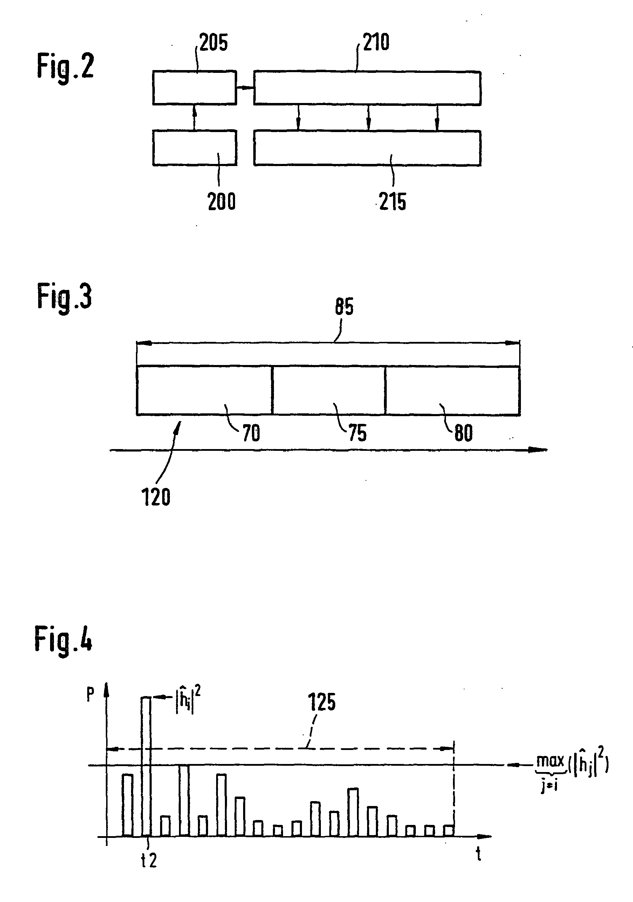

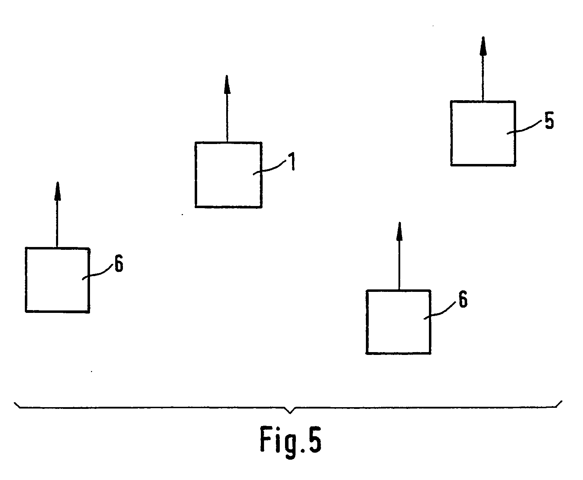

In der Figur 5 wird schematisch eine Funkzelle eines zellularen Mobiltelefonsystems bzw. Mobilfunksystems mit einer als Basisstation ausgebildeten Sendestation 1, einer als Mobilstation ausgebildeten ersten Empfangsstation 5 sowie weiteren ebenfalls als Mobilstationen ausgebildeten Empfangsstationen 6 dargestellt. Wesentlich an diesem System ist, daß ein Austausch von Daten immer nur zwischen der Basisstation 1 und den Mobilstationen 5, 6 erfolgt und kein direkter Datenaustausch zwischen den Mobilstationen 5, 6 möglich ist. Entsprechend werden die Basisstation 1 auch als Zentralstation und die Mobilstationen 5, 6 als Peripheriestationen bezeichnet. Der Austausch von Daten zwischen der Basisstation 1 und den Mobilstationen 5, 6 erfolgt durch Funkübertragung. Die Funkübertragung von der Basisstation 1 zu einer der Mobilstationen 5, 6 wird dabei als Downlink und die Datenübertragung von einer der Mobilstationen 5, 6 zur Basisstation 1 als Uplink bezeichnet. Bei einem derartigen, in der Figur 5 dargestellten System, mit einer Zentral- oder Basisstation 1 und mehreren Peripherie- oder Mobilstationen 5, 6 ist festzulegen, wie die Daten für die verschiedenen Mobilstationen 5, 6 moduliert werden, damit sie in den Empfängern der verschiedenen Mobilstationen 5, 6 getrennt detektiert werden können. Bei dem System nach Figur 5 handelt es sich um ein sogenanntes CDMA-System (Code Division Multiple Access), bei dem für die Datenübertragung ein gemeinsames Frequenzband zur Verfügung steht, wobei sich die einzelnen Funkkanäle zwischen der Basisstation 1 und den jeweiligen Mobilstationen 5, 6 hinsichtlich eines Codes unterscheiden, mit dem das Signal für die entsprechende Mobilstation 5, 6 gespreizt wird. Im folgenden wird der Fall beschrieben, in dem mehrere Mobilstationen 5, 6 neben der Basisstation 1 in der Funkzelle vorgesehen sind. Durch die Spreizung mit dem Code wird dabei jedes Signal, das zwischen der Basisstation 1 und einer bestimmten Mobilstation 5, 6 ausgetauscht werden soll, über das gesamte zur Verfügung stehende Spektrum verteilt. Jedes einzelne zu übertragende Informationsbit wird dabei in eine Vielzahl kleiner "Chips" zerlegt. Dadurch wird die Energie eines Bits über das gesamte Frequenzspektrum verteilt, welches dem CDMA-System zur Verfügung steht. In Figur 2 wird ein CDMA-System anhand einer Downlink-Übertragung näher erläutert.

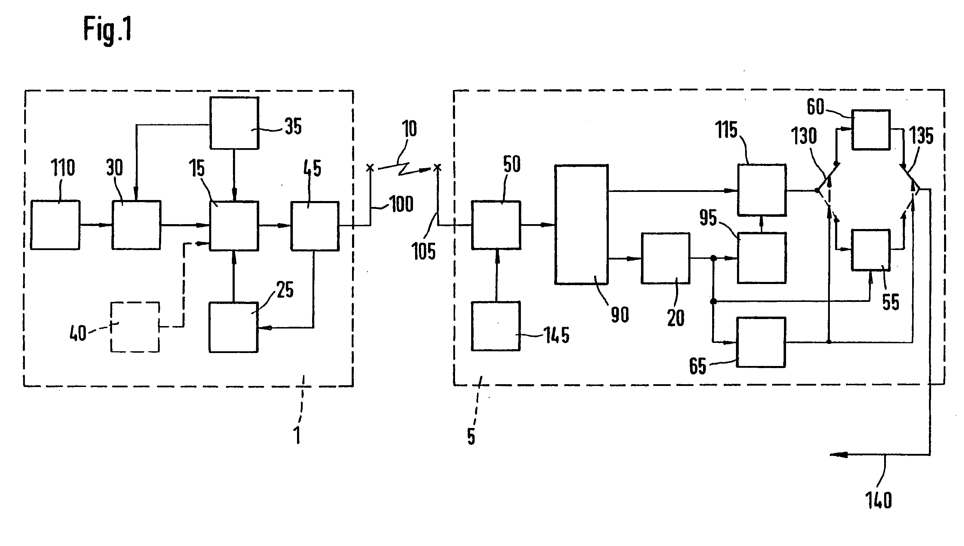

Die Figur 1 zeigt wiederum die als Basisstation ausgebildete Sendestation 1 und die als Mobilstation ausgebildete erste Empfangsstation 5. Die Basisstation 1 umfaßt dabei eine erste Antenne 100. Die erste Empfangsstation 5 umfaßt eine zweite Antenne 105. Die Basisstation 1 und die erste Empfangsstation 5 tauschen somit Daten über einen ersten Funkkanal 10 in Downlink-Übertragungsrichtung von der Basisstation 1 zur ersten Empfangsstation 5 und einen zweiten in Figur 1 nicht dargestellten Funkkanal in Uplink-Übertragungsrichtung von der ersten Empfangsstation 5 zur Sendestation 1 aus. Der erste Funkkanal 10 beschreibt dabei eine Übertragungsstrecke von der ersten Antenne 100 zur zweiten Antenne 105. Der zweite Funkkanal beschreibt eine Übertragungsstrecke von der zweiten Antenne 105 zur ersten Antenne 100. Die Basisstation 1 umfaßt einen Datengenerator 110, der eine Datenquelle darstellt und Datenströme erzeugt. Die Datenströme werden einem Modulator 30 der Basisstation 1 zugeführt, der die Datenströme von der Datenquelle 110 für die Übertragung über den ersten Funkkanal 10 aufbereitet. Dazu benötigt der Modulator 30 noch Codeinformationen, die von einem Codegenerator 35 zur Verfügung gestellt werden. Der Modulator 30 erzeugt aus den Datenströmen und den Codeinformationen ein mit den Codeinformationen gespreiztes Datensignal, welches einem Filter 15 der Basisstation 1 zugeführt wird. Dabei werden im Modulator 30 Datenströme für verschiedene Empfangsstationen mit verschiedenen Codes gespreizt. Im Filter 15 findet eine Vorentzerrung der Datenströme unter Berücksichtigung der Übertragungseigenschaften aller Funkkanäle und aller unterschiedlichen Codes statt. Die Berücksichtigung der unterschiedlichen Codes erfolgt mittels der Codeinformationen aus dem Codegenerator 35, der zu diesem Zweck mit dem Filter 15 verbunden ist. Die Berücksichtigung der Übertragungseigenschaften der Funkkanäle erfolgt durch einen Kanalschätzer 25, der die Funkkanäle in Uplink-Übertragungsrichtung von den einzelnen Empfangsstationen 5, 6 zur Basisstation 1 schätzt. Dies ist besonders dann möglich, wenn die Funkkanäle im Uplink und im Downlink gemäß einem Zeitschlitzduplexbetrieb TDD (Time Division Duplex) realisiert sind. Die Übertragungseigenschaften von Funkkanälen zwischen der Basisstation 1 und einer entsprechenden Empfangsstation sind dann im Uplink und im Downlink nahezu gleich.

Der Kanalschätzer 25 ist mit einer ersten Sende-/Empfangsvorrichtung 45 verbunden, an die die erste Antenne 100 als Sende-/Empfangsantenne angeschlossen ist und aus der der Kanalschätzer Referenzsignale von den einzelnen Empfangsstationen 5, 6 erhält, um die Übertragungseigenschaften im jeweiligen Uplink zu ermitteln und als Schätzung der Übertragungseigenschaften für den jeweiligen Downlink, im Beispiel nach Figur 1 also den ersten Funkkanal 10, zu verwenden.

Das Filter 15 ist vorzugsweise linear. Es kann vorgesehen sein, in der Basisstation 1 für jede Empfangsstation 5, 6, die sich in der Funkzelle der Basisstation 1 befindet, ein solches Filter vorzusehen. Die im durch den Modulator 30 kodierten Gesamtsignal enthaltenen verschieden CDMAkodierten Teilsignale für die einzelnen Empfangsstationen 5, 6 werden dann verschieden gefiltert. In Figur 1 ist beispielhaft das Filter 15 für die erste Empfangsstation 5 dargestellt.

Es ist weiterhin, wie in Figur 1 gestrichelt dargestellt, vorgesehen, daß ein Referenzsignalgenerator 40 in der Basisstation 1 vorgesehen ist, der für eine oder mehrere der Empfangsstationen 5, 6 jeweils ein Referenzsignal erzeugt. Dieses wird in gleicher Weise mit dem Filter 15 gefiltert wie die für die jeweilige Empfangsstation 5, 6 vorgesehenen Datensignale. Die Referenzsignale werden dabei dem Filter 15 vom Referenzsignalgenerator 40 gemäß Figur 1 zugeführt, so daß die Datensignale und die Referenzsignale durch das Filter 15 vorentzerrt werden.

Die Übertragung der Datensignale und der Referenzsignale von der Basisstation 1 an die erste Empfangsstation 5 gemäß dem hier beschriebenen Beispiel erfolgt in Form von Bursts 120 der Dauer 85 über der Zeitachse t gemäß Figur 3. Bursts 120, in denen Referenzsignale übertragen werden sollen, sind gemäß dem Beispiel in Figur 3 in einen ersten Block 70, einen zweiten Block 75 und einen dritten Block 80 aufgeteilt, wobei der mittlere, zweite Block 75 die Referenzsignale umfaßt und die beiden anderen Blöcke 70, 80 die Datensignale. Der Burst 120 wird dabei am Eingang des Filters 15 gebildet. Das Filter 15 kann nun die Vorentzerrung entweder blockweise durchführen, so daß die Blöcke 70, 75, 80 des Bursts 120 getrennt vorentzerrt werden, oder burstweise, so daß die Blöcke 70, 75, 80 zusammenhängend vorentzerrt werden. Der Referenzsignalgenerator 40 kann für jede Empfangsstation und damit gemäß dem hier beschriebenen Beispiel auch für die erste Empfangsstation 5 in der Funkzelle der Basisstation 1 ein eigenes Referenzsignal erzeugen, das in der entsprechenden Empfangsstation bekannt ist und als zweiter Datenblock 75 in einen der zur entsprechenden Empfangsstation zu übertragenden Bursts 120 vor der Filterung im Filter 15 eingefügt wird. Es ist dabei nicht erforderlich, in jeden Burst 120 ein Referenzsignal einzufügen. Die so gebildeten Bursts 120 werden wie beschrieben in den jeweiligen Filtern für die einzelnen Empfangsstationen 5, 6 vorentzerrt, wobei die Vorentzerrung für die erste Empfangsstation 5 im Filter 15 gemäß Figur 1 stattfindet. Die so vorentzerrten Bursts 120 werden dann vom Filter 15 bzw. von den Filtern an die Sende-/Empfangsvorrichtung 45 weitergeleitet, von wo sie über die erste Antenne 100 und die entsprechenden Funkkanäle im Downlink an die entsprechenden Empfangsstationen abgestrahlt werden bzw. im Fall der ersten Empfangsstation 5 über den ersten Funkanal 10.

Es kann dabei vorgesehen sein, daß die Sende-/Empfangsvorrichtung 45 zumindest einen Teil der an die jeweilige Empfangsstation zu sendenden Datensignale und gegebenenfalls Referenzsignale nach deren Filterung um eine oder mehrere Komponenten kürzt, maximal auf die Länge der Daten- bzw. Referenzsignale vor der Filterung.

Der Modulator 30 erzeugt aus den Datenströmen und den Codeinformationen ein Sendesignal, das der ersten Empfangsstation 5 und den weiteren Empfangsstationen 6 nach Filterung im jeweiligen Filter zugesendet wird. In Figur 1 wird exemplarisch nur die erste Empfangsstation 5 als empfangende Mobilstation dargestellt. Wäre nur die erste Empfangsstation 5 als empfangende Mobilstation in der Funkzelle zur Versorgung mit einem einzigen Datenstrom vorgesehen, so würde in der Basisstation 1 nur eine Codeinformation benötigt. Die Basisstation 1 sendet jedoch in der Regel gleichzeitig über entsprechende Funkkanäle auch zu den weiteren Empfangsstationen 6, deren jeweilige Daten ebenfalls mit verschiedenen Codes moduliert sind. Die weiteren Empfangsstationen 6 werden aus Vereinfachungsgründen in Figur 1 nicht dargestellt.

Der Codegenerator 35 erzeugt Codes in Abhängigkeit von gewählten Funkverbindungen zu den Empfangsstationen 5, 6.

Die mit den Signalen zu übertragenden Daten werden im Modulator 30 mit diesen Codes gespreizt.

Bei der Übertragung zwischen der Basisstation 1 und der ersten Empfangsstation 5 treten nun eine Vielzahl von Störungen auf. Eine erste Störung wird dabei als ISI (Intersymbolinterferenz) bezeichnet und resultiert daher, daß ein ausgesandtes Funksignal über mehrere verschiedene Pfade zum Empfänger gelangen kann, wobei sich die Ankunftszeiten beim Empfänger geringfügig unterscheiden. Es handelt sich somit um eine Störung, die in dem betreffenden Funkkanal dadurch entsteht, daß zeitlich vorhergehend ausgesandte Signale aktuell empfangene Signale stören (daher: Inter-Symbol-Interferenz). Eine weitere Störung erfolgt dadurch, daß mehrere Datenströme gleichzeitig übertragen werden, die sich nur hinsichtlich des Codes unterscheiden. Diese Störung tritt auf, wenn die Basisstation 1 mit mehreren Empfangsstationen 5, 6 gleichzeitig in Funkkontakt steht, was bei modernen Mobiltelefonsystemen den Regelfall darstellt. Es handelt sich somit um eine Störung, die von den Signalen unterschiedlicher Benutzer ausgeht und die daher auch als MAI (multiple access interference) bezeichnet wird.

MAI und ISI werden durch die Vorentzerrung mittels des oder der Filter in der Basisstation eliminiert.

Im folgenden wird der Empfang der von der Basisstation 1 ausgesandten Signale in der ersten Empfangsstation 5 beispielhaft betrachtet. Die erste Empfangsstation 5 umfaßt dazu eine Sende-/Empfangsschaltung 50, an die die zweite Antenne 105 als Sende-/Empfangsantenne angeschlossen ist. Über die zweite Antenne 105 empfängt die erste Empfangsstation dabei in der Regel sämtliche Downlink-Datenströme in der Funkzelle der Basisstation 1, und zwar über ihren ersten Funkanal 10. Die über diesen Downlink-Funkanal empfangenen Signale der Basisstation 1 werden von der Sende-/Empfangsschaltung 50 an einen Demultiplexer 90 weitergeleitet, der aus den empfangenen Signalen aufgrund der bekannten Burststruktur gemäß Figur 3 die Datensignale von den Referenzsignalen in den verschiedenen Blöcken 70, 75, 80 der jeweiligen Bursts 120 trennen kann. Die auf diese Weise empfangenen und in der Regel für mehrere Empfangsstationen vorgesehenen Referenzsignale werden einem ersten Korrelationsempfänger 20 zugeführt und dort mit dem für die erste Empfangsstation 5 vorgegebenen Referenzsignal korreliert.

Dem ersten Korrelationsempfänger 20 ist eine Synchronisiervorrichtung 95 nachgeschaltet, die aus dem Ergebnis der Korrelation die durch den Demultiplexer 90 getrennten Datensignale in einer dem Demultiplexer 90 für die extrahierten Datensignale nachgeschalteten Datenaufbereitungseinheit 115 synchronisiert. Dazu wählt sie den Zeitpunkt des größten vom ersten Korrelationsempfänger ermittelten Korrelationswertes als Synchronisationszeitpunkt, da zu diesem Zeitpunkt höchste Korrelation zwischen den empfangenen Referenzsignalen und dem für die erste Empfangsstation 5 vorgegebenen Referenzsignal herrscht. Das Ergebnis der Korrelation ist in Figur 4 dargestellt. Dort ist die Leistung P der bei der Korrelation ermittelten einzelnen Komponenten $\hat{h}_i$, $\hat{h}_j$ über der Zeit t aufgetragen. Zu einem Zeitpunkt $t_2$ wird dabei der größte Korrelationswert $\left|\hat{h}_i\right|^2 > \max_{j \neq i}\left(\left|\hat{h}_j\right|^2\right)$ ermittelt, so daß der Zeitpunkt $t_2$ als Synchronisationszeitpunkt gewählt wird. Entsprechend paßt die Synchronisiervorrichtung 95 die Phase der empfangenen Datensignale in der Datenaufbereitungseinheit 115 an die Phase des größten ermittelten Korrelationswertes zum Zeitpunkt $t_2$ an.

Mittels des ersten Korrelationsempfängers 20 erfolgt auch eine Kanalschätzung des ersten Funkkanals 10 aus den empfangenen Referenzsignalen. Die Kanalschätzung kann dabei ebenfalls aus dem Vergleich der empfangenen Referenzsignale mit dem für die erste Empfangsstation 5 vorgegebenen Referenzsignal mittels Korrelation wie beschrieben erfolgen, wobei sich wie beschrieben die Komponenten $\hat{h}_i$, $\hat{h}_j$ der Kanalschätzung gemäß Figur 4 ergeben. Dem ersten Korrelationsempfänger 20 ist nun auch eine Auswertevorrichtung 65 nachgeschaltet, die mittels der Kanalschätzung prüft, ob innerhalb eines vorgegebenen Zeitraums 125 gemäß Figur 4 in genau einem Pfad i des ersten Funkkanals 10 der vorgegebene Leistungswert $c_{crit} \cdot \max_{j \neq i}\left(\left|\hat{h}_j\right|^2\right)$ überschritten wird, wobei $c_{crit}$ ein festzulegender kritischer Faktor ist. Ist dies der Fall, so wird Einwegempfang in der Auswertevorrichtung 65 festgestellt, andernfalls wird Mehrwegempfang festgestellt. Gemäß dem Beispiel nach Figur 4 wird der vorgegebene Leistungswert $c_{crit} \cdot \max_{j \neq i}\left(\left|\hat{h}_j\right|^2\right)$ nur zum Zeitpunkt $t_2$ innerhalb des vorgegebenen Zeitraums 125 überschritten, so daß von Einwegempfang ausgegangen wird.

Der vorgegebene Zeitraum 125 ist dabei in der Größenordnung des maximalen Verzögerungsunterschiedes der Kanalpfade eines Zeitschlitzes gewählt. Bei zu kurzem vorgegebenen Zeitraum 125 besteht die Gefahr einer fälschlichen Detektion eines Einwegempfangs, bei zu langem vorgegebenem Zeitraum 125 besteht die Gefahr einer fälschlichen Detektion eines Mehrwegempfangs.

Die erste Empfangsstation 5 umfaßt nun weiterhin einen ersten Detektor 55 zur Durchführung eines Verfahrens zur Entzerrung und Entspreizung der empfangenen Datensignale.

Dazu kann beispielsweise ein Joint Detection Verfahren angewendet werden oder ein Rake-Empfänger eingesetzt werden. Der erste Detektor 55 ist über einen ersten steuerbaren Schalter 130 mit dem Ausgang der Datenaufbereitungseinheit 115 verbindbar.

Die erste Empfangsstation 5 umfaßt außerdem einen zweiten Detektor 60 zur Durchführung eines Verfahrens zur Datendetektion lediglich durch Entspreizung der empfangenen Datensignale. Dazu kann beispielsweise ein zweiter Korrelationsempfänger eingesetzt werden. Der zweite Detektor 60 ist alternativ zum ersten Detektor 55 über den ersten steuerbaren Schalter 130 mit dem Ausgang der Datenaufbereitungseinheit 115 verbindbar.

Über einen zweiten steuerbaren Schalter 135 ist wahlweise der erste Detektor 55 oder der zweite Detektor 60 mit einem Datenausgang 140 verbindbar, der die detektierten Daten einer Weiterverarbeitung zuführt.

Die Ansteuerung der beiden steuerbaren Schalter 130, 135 erfolgt durch die Auswertevorrichtung 65. Das vom ersten Detektor 55 durchzuführende Verfahren zur Entzerrung und Entspreizung benötigt zumindest für den Entzerrungsvorgang die Kanalschätzung der Übertragungseigenschaften des ersten Funkkanals 10, die vom ersten Korrelationsempfänger 20 an den ersten Detektor 55 geliefert wird.

Die Auswertevorrichtung 65 steuert nun die beiden steuerbaren Schalter 130, 135 derart an, daß sie den ersten Detektor 55 mit der Datenaufbereitungseinheit 115 und dem Datenausgang 140 verbinden, wenn Mehrwegempfang festgestellt wird. Bei detektiertem Einwegempfang hingegen steuert die Auswertevorrichtung 65 die beiden steuerbaren Schalter 130, 135 derart an, daß sie den zweiten Detektor 60 mit der Datenaufbereitungseinheit 115 und dem Datenausgang 140 verbinden.

Für die in jedem Fall erforderliche Entspreizung durch den ersten Detektor 55 oder den zweiten Detektor 60 sind in der ersten Empfangsstation 5 die der ersten Empfangsstation 5 zugeordneten Codeinformationen abgelegt und den beiden Detektoren zugeführt. Dies ist in Figur 1 aus Gründen der Übersichtlichkeit nicht dargestellt.

Für die Übertragung im Uplink umfaßt die erste Empfangsstation 5 eine weitere Datenquelle 145, von der Datensignale und gegebenenfalls Referenzsignale über die Sende-/Empfangsschaltung 50 und die zweite Antenne 105 zur Basisstation 1 übertragen werden. Anhand der im Uplink übertragenen Referenzsignale kann der Kanalschätzer 25 beispielsweise durch den beschriebenen Korrelationsempfang den in Figur 1 nicht dargestellten Funkkanal im Uplink schätzen und die Schätzung für die Vorentzerrung im Filter 15 verwenden wie beschrieben.

Durch die Vorentzerrung mit dem Filter 15 ist es möglich, das Filter 15 zusammen mit dem ersten Funkkanal 10 als Übertragungskanal zu betrachten und in der ersten Empfangsstation eine Gesamtimpulsantwort für diesen Übertragungskanal zu schätzen. Dies ist die Voraussetzung dafür, eine Entzerrung der über diesen Übertragungskanal übertragenen Datensignale in der ersten Empfangsstation 5 zu ermöglichen. Die Entzerrung in der ersten Empfangsstation 5 berücksichtigt somit auch eine fehlerhafte Vorentzerrung durch das Filter 15, die sich insbesondere dann ergibt, wenn sich beispielsweise aufgrund einer entsprechend schnellen Relativbewegung der ersten Empfangsstation 5 gegenüber der Basisstation 1 die Eigenschaften des ersten Funkkanals 10 so schnell ändern, daß die Schätzung der Übertragungseigenschaften des ersten Funkkanals 10 aufgrund der Ermittlung der Übertragungseigenschaften im Uplink zum Zeitpunkt der nachfolgenden Übertragung über den ersten Funkkanal 10 nicht mehr aktuell ist. Die Entzerrung in der ersten Empfangsstation 5 eliminiert dann die durch fehlerhafte Vorentzerrung noch vorhandene MAI und ISI.

Voraussetzung für die Berücksichtigung der Vorentzerrung bei der Entzerrung ist die Verwendung eines Filters 15 mit während der Dauer 85 eines Bursts 120 konstanten Koeffizienten, die sich jedoch von Burst zu Burst in Abhängigkeit der Kanalschätzung im Uplink mittels dem Kanalschätzer 25 ändern können.

In der ersten Empfangsstation 5 wird der erste Funkkanal 10 mit Hilfe des zugeordneten und durch den ersten Korrelationsempfänger 20 wie beschrieben detektierten vorentzerrten Referenzsignals geschätzt. Die Schätzung beschreibt nicht nur den ersten Funkkanal 10 selbst, sondern wie beschrieben die Kombination aus dem ersten Funkkanal 10 und dem Filter 15. Zusätzlich wird bei dieser Schätzung auch die HF-Verarbeitung, die in der Basisstation 1 die Sende-/Empfangsvorrichtung 45 mit einem HF-Filter, einem Leistungsverstärker und einer Verdrahtung und die in der ersten Empfangsstation 5 die Sende-/Empfangsschaltung 50 mit einem HF-Filter, einem Verstärker, einem ZF-Filter, einem Basisband-Filter und einer Verdrahtung umfaßt, berücksichtigt. HF-Filter, ZF-Filter, Basisband-Filter, Verstärker und Verdrahtung sind in der Figur 1 nicht dargestellt.

Dies hat den Vorteil, daß alle auf der Kanalschätzung basierenden Funktionen der ersten Empfangsstation 5, insbesondere die Synchronisierung der ersten Empfangsstation 5 auf die Basisstation 1 mittels eines Referenzsignals, gegenüber einem System ohne Vorentzerrung beibehalten werden können. Das System mit Filter-Vorentzerrung ist nämlich einem System ohne Vorentzerrung äquivalent, bei dem der erste Funkkanal 10 um das Filter 15 erweitert ist. Dies bedeutet insbesondere folgende Vorteile:

Trotz Vorentzerrung können entzerrende Verfahren wie beispielsweise JD-Verfahren (Joint Detection) oder ein Rake-Empfänger zur Detektion eingesetzt werden. Da die Vorentzerrung in der Empfänger-Kanalschätzung voll berücksichtigt wird, wird sie durch ein solches entzerrendes Verfahren, das die Gesamtkanalschätzung verwendet, automatisch ebenfalls berücksichtigt.

Auf den Referenzsignalen basierende Synchronisations-Mechanismen können unverändert weiterverwendet werden. Die aufgrund der Vorentzerrung nötige Veränderung der Synchronisation gegenüber einem System ohne Vorentzerrung wird automatisch durch die durch Vorentzerrung veränderten Referenzsignale berücksichtigt.

Auch die HF-Übertragungseigenschaften der Basisstation 1 und der ersten Empfangsstation sind in den Kanalschätzungen der ersten Empfangsstation enthalten. Die HF-Übertragungseigenschaften in der Rückwärtsstrecke im Uplink sind im durch den Kanalschätzer 25 mitgeschätzten Filter 15 enthalten. Die HF-Übertragungseigenschaften in der Vorwärtsstrecke im Downlink werden in der ersten Empfangsstation 5 direkt mitgeschätzt. Laufzeitunterschiede durch unterschiedliche HF-Übertragungseigenschaften in Rückwärts- und Vorwärtsstrecke, werden dabei automatisch durch die auf den Referenzsignalen basierende Synchronisation berücksichtigt.

Durch Übertragung von Referenzsignalen von der Basisstation 1 zur ersten Empfangsstation 5 kann die erste Empfangsstation 5 auf die Übertragung der für die erste Empfangsstation 5 bestimmten Signale synchronisiert werden, wobei durch die Vorentzerrung der Referenzsignale in der Basisstation 1 die Eigenschaften des Rückkanals im Uplink für die Synchronisierung berücksichtigt werden, die in der Regel eine Phasendrehung zur Folge haben.

Durch die Prüfung in der ersten Empfangsstation 5 auf Mehrwegempfang und die davon abhängige Auswahl der Detektionsart ist eine Signalisierung seitens der Basisstation 1 über die in der ersten Empfangsstation 5 zu verwendende Datendetektion nicht mehr erforderlich.

Es kann auch zusätzlich oder alternativ vorgesehen sein, eine Vorentzerrung mit Filterung in einer Empfangsstation 5, 6 für die Übertragung im Uplink vorzusehen und eine bislang für die Empfangsstationen 5, 6 beschriebene Datendetektion in entsprechender Weise in der Basisstation 1 für die Detektion der im Uplink übertragenen Daten in der Basisstation 1 vorzusehen.

Das oben beschriebene mehrkanalige Übertragungsverfahren zwischen der Basisstation 1 und den Empfangsstationen 5, 6, die im folgenden auch als Nutzer bezeichnet werden, und bei dem die Übertragungseigenschaften aller Funkkanäle, die verantwortlich für ISI sind, und die Codes aller Funkkanäle, die verantwortlich für MAI sind, berücksichtigt werden, wird im folgenden durch mathematische Formeln beschrieben. Diese Formeln können entweder durch ein entsprechendes Programm oder entsprechende Hardwarebausteine, die diese Formeln implementieren, realisiert werden.

Figur 2 zeigt einen zeitlichen Ablauf bei TDD-Betrieb mit Vorentzerrung. Bei einem ersten Schritt 200 sendet die erste Empfangsstation 5 Referenzsignale zur Schätzung der Übertragungseigenschaften des ersten Funkkanals 10 an die Basisstation 1. Diese Kanalschätzung wird in einem zweiten Schritt 205 nach Empfang der Referenzsignale in der Basisstation 1 durchgeführt. Anschließend findet im Modulator 30 eine Spreizung und im Filter 15 eine Vorentzerrung der an die erste Empfangsstation 5 zu übertragenden Signale in einem dritten Schritt 210 statt. Die vorentzerrten Signale werden dann von der ersten Empfangsstation 5 in einem vierten Schritt 215 empfangen und werden dort nach Prüfung durch die Auswertevorrichtung 65 entweder entzerrt und entspreizt oder nur entspreizt.

Figur 1 zeigt wie beschrieben die Basisstation 1 zur Kanalschätzung in der Rückwärtsstrecke und zum Senden der vorentzerrten Signale. Figur 2 zeigt wie beschrieben den zeitlichen Ablauf des Verfahrens.

Im folgenden wird ein möglicher Algorithmus zur Berechnung der vorentzerrenden Filter beschrieben. Die Beschreibung erfolgt im Basisband, also diskret. Die Daten werden blockweise übertragen. Sei $\underline{d}^{(k)} = (d^{(k)}_1,...,d^{(k)}_M)$, $k = 1,..., K$ der Vektor der $M$ zu übertragenden Datensymbole des $k$-ten Nutzers. Mit den CDMA-Codes $\underline{c}^{(k)} = (c^{(k)}_1,..., c^{(k)}_Q)$, $k = 1,..., K$ und den Matrizen

$$C^{(k)} = \begin{pmatrix} \underline{c}^{(k)^T} & 0 & 0 \\ 0 & \ddots & 0 \\ 0 & 0 & \underline{c}^{(k)^T} \end{pmatrix} \Big\} M \cdot Q , \quad k = 1,...,K$$

$$\underbrace{\phantom{xxxxxxxxxx}}_{M}$$

$\underline{c}^{(k)^T}$ = transponierter Vektor $\underline{c}^{(k)}$ läßt sich das CDMA-kodierte Datensignal des $k$-ten Nutzers $\underline{x}^{(k)^T}$ schreiben als

$$\underline{x}^{(k)^T} = C^{(k)} \cdot \underline{d}^{(k)^T}$$

Diese Signale werden nach der Modulation im Filter 15 bzw. in den Filtern für die einzelnen Empfangsstationen 5, 6 bzw. Nutzer linear gefiltert. Die Filter-Koeffizienten seien mit $p^{(k)}_v$ , $v=1,...,V$ , wobei $V$ die festzulegende Filterlänge ist, bezeichnet. Die Filterung kann in Matrixschreibweise geschrieben werden als:

$$X^{(k)} \cdot \underline{p}^{(k)^T}$$

wobei

$$X^{(k)} = \begin{pmatrix} x^{(k)}_1 & 0 & 0 \\ \vdots & \ddots & x^{(k)}_1 \\ x^{(k)}_{M \cdot Q} & \ddots & \vdots \\ 0 & 0 & x^{(k)}_{M \cdot Q} \end{pmatrix} \Big\} M \cdot Q + V - 1$$

$$\underbrace{\phantom{xxxxxxxxxx}}_{V}$$

Die gefilterten Signale werden summiert zu

$$D \cdot X \cdot \underline{p}^{T}$$

mit

$$D = \begin{pmatrix} 1 & 0 & 0 & 1 & 0 & 0 & \cdots \\ 0 & \ddots & 0 & 0 & \ddots & 0 & \cdots \\ 0 & 0 & 1 & 0 & 0 & 1 & \cdots \end{pmatrix} \left.\vphantom{\begin{pmatrix}1\\0\\0\end{pmatrix}}\right\} M \cdot Q + V - 1$$

$$\underbrace{\phantom{\begin{pmatrix}1 & 0 & 0 & 1 & 0 & 0 & \cdots\end{pmatrix}}}_{(M \cdot Q + V - 1) \cdot K}$$

$$X = \begin{pmatrix} X^{(1)} & 0 & 0 \\ 0 & \ddots & 0 \\ 0 & 0 & X^{(K)} \end{pmatrix}$$

$$\underline{p} = (\underline{p}^{(1)}, \ldots, \underline{p}^{(K)})$$

Eine allgemeine Vorentzerrung der gespreizten Signale läßt sich schreiben als:

$$D \cdot P \cdot C \cdot \underline{d}^{T} \ ,$$

wobei P eine Vorentzerrungsmatrix darstellt. Die oben beschriebene lineare Filterung entspricht dieser Schreibweise mit

$$P = \begin{pmatrix} P^{(1)} & 0 & 0 \\ 0 & \ddots & 0 \\ 0 & 0 & P^{(K)} \end{pmatrix}$$

und

$$P^{(k)} = \begin{pmatrix} p_1^{(k)} & 0 & 0 \\ \vdots & \ddots & 0 \\ p_V^{(k)} & & p_1^{(k)} \\ 0 & \ddots & \vdots \\ 0 & 0 & p_V^{(k)} \end{pmatrix}$$

Die Struktur der Vorentzerrungsmatrix $P$ ist dabei so gewählt, daß sie einer linearen Filterung entspricht. Dies bedeutet, daß die Koeffizienten $p_1^{(k)},...,p_V^{(k)}$ der Vorentzerrungsmatrix $P$ entsprechend obiger Matrixdarstellung und wie beschrieben während eines Bursts 120 jeweils konstant bleiben.

Anschließend wird dieses Summensignal über Mehrwegekanäle zu den Empfangsstationen 5, 6 übertragen. Mit den Impulsantworten $\underline{h}^{(k)}=(h_1^{(k)},...,h_W^{(k)})$ ($W$ = Kanallänge), dem additiven Rauschen $\underline{n}^{(k)}=(n^{(k)}_1,...,n^{(k)}_{M-Q+W-1})$, $k=1,...,K$ der verschiedenen Nutzerübertragungskanäle und den Faltungsmatrizen

$$H^{(k)} = \underbrace{\begin{pmatrix} h^{(k)}_1 & 0 & 0 \\ \vdots & \ddots & 0 \\ h^{(k)}_W & \vdots & h^{(k)}_1 \\ 0 & \ddots & \vdots \\ 0 & 0 & h^{(k)}_W \end{pmatrix}}_{M \cdot Q + V - 1} \Big\} M \cdot Q + 2 \cdot V - 2$$

empfängt der $k$-te Nutzer des Systems also das Signal

$$\underline{s}^{(k)^T} = H^{(k)} \cdot D \cdot X \cdot \underline{p}^T + \underline{n}^{(k)^T} \ .$$

Der zweite Korrelationsempfänger 60, der als 'code matched filter'-Empfänger, beispielsweise in Form eines sogenannten 1-Finger-Rake-Empfängers, ausgebildet sein kann, demoduliert die empfangenen Datensignale unter Verwendung des der ersten Empfangsstation zugeordneten $k$-ten Nutzercodes $\underline{c}^{(k)}$ wie folgt:

$$\hat{\underline{d}}^{(k)^T} = R^{(k)^H} \cdot \underline{s}^{(k)^T}$$

mit $R^{(k)H}$ = konjugiert transponierte Matrix $R^{(k)}$ und

$$R^{(k)} = \begin{pmatrix} 0 & 0 & 0 \\ \vdots & \vdots & \vdots \\ 0 & & \\ \underline{c}^{(k)T} & 0 & \\ 0 & \ddots & 0 \\ 0 & 0 & \underline{c}^{(k)T} \end{pmatrix} \left. \vphantom{\begin{pmatrix} 0 \\ 0 \\ 0 \\ 0 \\ 0 \\ 0 \end{pmatrix}} \right\} M \cdot Q + 2 \cdot V - 2$$

$$\underbrace{\phantom{xxxxxxxxx}}_{M}$$

Mit den Zusammenfassungen

$$R = \begin{pmatrix} R^{(1)} & 0 & 0 \\ 0 & \ddots & 0 \\ 0 & 0 & R^{(K)} \end{pmatrix}$$

$$H = \begin{pmatrix} H^{(1)} & 0 & 0 \\ 0 & \ddots & 0 \\ 0 & 0 & H^{(K)} \end{pmatrix}$$

$$\underline{n} = (\underline{n}^{(1)}, \ldots, \underline{n}^{(K)})$$

und der Vervielfachungsmatrix $D^T$, erhält man als Gesamtvektor aller demodulierter Signale:

$$\hat{\underline{d}} = R^H \cdot H \cdot D^T \cdot D \cdot X \cdot \underline{p}^T + R^H \cdot \underline{n}^T$$

Hieraus folgt, daß die Abweichung von $\hat{\underline{d}}$ zu $\underline{d}$ minimal wird, wenn für $\underline{p}$ die folgende Pseudoinversenlösung gewählt wird:

$$\underline{p}^T = (R^H \cdot H \cdot D^T \cdot D \cdot X)' \cdot \underline{d}^T$$

$M'$ bezeichnet die Pseudoinverse der Matrix $M$.

Das Sendesignal $D \cdot X \cdot \underline{p}^T$ ist gegenüber dem nicht vorentzerrten Signal $\sum_{k=1}^{K} \underline{x}^{(k)}$ um $V$-1 Komponenten verlängert. Um Interferenzen aufeinanderfolgender Bursts zu vermeiden, kann es daher vorgesehen sein, nur das um $V$-1 Komponenten verkürzte Signal zu senden.

Wenn die Auswertevorrichtung 65 aufgrund der Kanalschätzung in der ersten Empfangsstation 5 nur einen Übertragungspfad signifikanter Leistung enthält, wird zur Datendetektion wie beschrieben der zweite Korrelationsempfänger 60 beispielsweise in Form eines Code matched-filter eingesetzt, der die empfangenen Datensignale gemäß der beschriebenen Gleichung

$$\hat{\underline{d}}^{(k)^T} = R^{(k)^H} \cdot \underline{s}^{(k)^T}$$

demoduliert. Wenn die Auswertevorrichtung 65 jedoch mehr als einen Übertragungspfad signifikanter Leistung enthält, wird zur Detektion ein entzerrendes Verfahren mittels des ersten Detektors 55, beispielsweise ein JD-Verfahren oder ein Rake-Empfänger eingesetzt. Dies ermöglicht den Datenempfang auch bei fehlerhafter Vorentzerrung, wie sie wie beschrieben vor allem bei hohen Geschwindigkeiten auftritt, da die in der Rückwärtsstrecke gemachte Kanalschätzung dann nicht mehr mit dem zu einem späteren Zeitpunkt verwendeten ersten Funkkanal 10 der Vorwärtsstrecke übereinstimmt. Als Kriterium für einen Pfad signifikanter Leistung kann wie beschrieben die folgende Bedingung gemäß Figur 4 genommen werden:

Es gibt ein *i,* so daß $\left|\hat{h}_i\right|^2 \ge c_{crit} \cdot \underset{j \ne i}{\max}\left(\left|\hat{h}_j\right|^2\right)$

Dabei ist $0 < c_{crit} < 1$ der beschriebene festzulegende kritische Faktor. $\hat{h}_j$ bezeichnet die *j*-te Komponente der Kanalschätzung.

Da aufgrund der geschätzten Kanalimpulsantwort in der ersten Empfangsstation 5 durch die Auswertevorrichtung 65 entschieden wird ob die MAI durch Vorentzerrung in der Basisstation 1 allein oder zusätzlich durch Entzerrung in der ersten Empfangsstation 5 eliminiert wird, braucht dies der ersten Empfangsstation 5 nicht signalisiert werden.

Die Eliminierung von ISI und MAI im Filter 15 der Basisstation 1 wird auch als gemeinsame Vorentzerrung JP (Joint Predistortion) bezeichnet.

Unter dem Begriff Entzerrung wird hier allgemein eine Maßnahme in der entsprechenden Empfangsstation verstanden, die einen Mehrwegeempfang für die Detektion der Datensignale berücksichtigt, sei es beispielsweise durch die Anwendung eines JD-Verfahrens (Joint Detection) oder durch die Verwendung eines Rake-Empfängers, der die über mehrere Pfade des ersten Funkkanals 10 empfangenen Datensignale jeweils in einem eigenen sogenannten Rake-Pfad empfängt und die so separat empfangenen Datensignale der einzelnen Pfade des ersten Funkkanals 10 aufsummiert, so daß sich ein Diversity-Empfang ergibt.

**Patentansprüche**

1.  Verfahren für die Übertragung von Datensignalen zwischen einer Sendestation (1) und mehreren Empfangsstationen (5, 6) über Funkkanäle (10), wobei in der Sendestation (1) die Datensignale für unterschiedliche Empfangsstationen (5, 6) mit unterschiedlichen Codes gespreizt werden, wobei eine Vorentzerrung der zu übertragenden Datensignale vorgenommen wird und wobei bei der Vorentzerrung die Übertragungseigenschaften aller Funkkanäle (10) und alle unterschiedlichen Codes berücksichtigt werden, wobei die zu übertragenden Datensignale in der Sendestation (1) durch Filterung vorentzerrt werden, **dadurch gekennzeichnet, dass** zumindest mit einem Teil der Datensignale Referenzsignale zu den verschiedenen Empfangsstationen (5) übertragen und vor ihrer Übertragung in gleicher Weise wie die Datensignale gefiltert werden.

2.  Verfahren nach Anspruch 1, **dadurch gekennzeichnet, dass** die Filterung mit einem linearen Filter (15) durchgeführt wird.

3.  Verfahren nach Anspruch 1 oder 2, **dadurch gekennzeichnet, dass** Datensignale für verschiedene Empfangsstationen (5) verschieden gefiltert werden.

4.  Verfahren nach einem der vorherigen Ansprüche, **dadurch gekennzeichnet, dass** die Datensignale und die Referenzsignale gemeinsam vorentzerrt werden.

5.  Verfahren nach einem der vorherigen Ansprüche, **dadurch gekennzeichnet, dass** die Datensignale und die Referenzsignale in getrennten Blöcken (70, 75, 80) eines Bursts (120) übertragen werden.

6.  Verfahren nach Anspruch 5, **dadurch gekennzeichnet, dass** die Vorentzerrung blockweise durchgeführt wird, so dass die Blöcke (70, 75, 80) des Bursts (120) getrennt vorentzerrt werden.

7.  Verfahren nach Anspruch 5, **dadurch gekennzeichnet, dass** die Vorentzerrung burstweise durchgeführt wird, so dass die Blöcke (70, 75, 80) zusammenhängend vorentzerrt werden.

8.  Verfahren nach einem der vorherigen Ansprüche, **dadurch gekennzeichnet, dass** für eine erste Empfangsstation (5) ein eigenes Referenzsignal übertragen wird.

9.  Verfahren nach einem der vorherigen Ansprüche, **dadurch gekennzeichnet, dass** zumindest ein Teil der Datensignale nach ihrer Filterung und vor ihrer Übertragung um mindestens eine Komponente verkürzt wird.

10. Verfahren nach Anspruch 8 oder 9, **dadurch gekennzeichnet, dass** in der ersten Empfangsstation (5) die empfangenen Referenzsignale in einem ersten Korrelationsempfänger (20) mit dem für diese Empfangsstation (5) vorgegebenen Referenzsignal korreliert werden.

11. Verfahren nach Anspruch 10, **dadurch gekennzeichnet, dass** der Zeitpunkt des größten Korrelationswertes als Synchronisationszeitpunkt zum Synchronisieren der für diese erste Empfangsstation (5) übertragenen Datensignale verwendet wird.

12. Verfahren nach Anspruch 10 oder 11, **dadurch gekennzeichnet, dass** die Phase der empfangenen Datensignale an die Phase des größten Korrelationswertes angepasst wird.

13. Verfahren nach einem der Ansprüche 8 bis 12, **dadurch gekennzeichnet, dass** aus den in der ersten Empfangsstation (5) empfangenen Referenzsignalen eine Kanalschätzung des Funkkanals (10) von der Sendestation (1) zur ersten Empfangsstation (5) abgeleitet wird.

14. Verfahren nach Anspruch 13, **dadurch gekennzeichnet, dass** die Kanalschätzung durch Vergleich der empfangenen Referenzsignale mit dem für die erste Empfangsstation (5) vorgegebenen Referenzsignal mittels Korrelation ermittelt wird.

15. Verfahren nach Anspruch 13 oder 14, **dadurch gekennzeichnet, dass** in Abhängigkeit der Kanalschätzung in der ersten Empfangsstation (5) ein Verfahren zur Datendetektion gewählt wird.

16. Verfahren nach Anspruch 15, **dadurch gekennzeichnet, dass** bei der ersten Empfangsstation (5) geprüft wird, ob die Datensignale über mehrere Wege empfangen wurden, dass in diesem Fall ein Verfahren zur Entzerrung und Entspreizung der empfangenen Datensignale, insbesondere mittels eines Rake-Empfängers oder eines Joint Detection Verfahrens, angewendet wird und dass andernfalls eine Datendetektion lediglich durch Entspreizung, insbesondere mittels eines zweiten Korrelationsempfängers (60), durchgeführt wird.

17. Verfahren nach Anspruch 16, **dadurch gekennzeichnet, dass** das Verfahren zur Entzerrung und Entspreizung der empfangenen Datensignale in Abhängigkeit einer mit den empfangenen Referenzsignalen durchgeführten Kanalschätzung ausgeführt wird.

18. Verfahren nach Anspruch 16 oder 17, **dadurch gekennzeichnet, dass** ein Einwegeempfang dann festgestellt wird, wenn innerhalb einer vorgegebenen Zeit in genau einem Pfad i des Funkkanals (10) von der Sendestation (1) zu der entsprechenden Empfangsstation (5) ein vorgegebener Leistungswert ($c_{crit} \cdot \max\limits_{j \neq i}\left(\left|\hat{h}_j\right|^2\right)$) überschritten wird und dass andernfalls ein Mehrwegeempfang festgestellt wird.

19. Sendestation (1) für die Übertragung von Datensignalen zu mehreren Empfangsstationen (5) über Funkkanäle (10), wobei die Datensignale für verschiedene Empfangsstationen (5) mit unterschiedlichen Codes gespreizt werden, wobei ein Modulator (30), ein Codegenerator (35) und ein Kanalschätzer (25) vorgesehen sind, wobei der Modulator (30) eine Spreizung der zu übertragenden Datensignale aufgrund der Informationen des Codegenerators (35) vornimmt und wobei ein Filter (15) vorgesehen ist, mit dem die Sendestation (1) eine Vorentzerrung aufgrund der Informationen des Codegenerators (35) und des Kanalschätzers (25) vornimmt, **dadurch gekennzeichnet, dass** ein Referenzsignalgenerator (40) vorgesehen ist, mit dem die Sendestation (1) zumindest für eine der Empfangsstationen (5) ein Referenzsignal erzeugt und dass eine Filterung des Referenzsignals in gleicher Weise wie bei den zu dieser Empfangsstation (5) zu übertragenden Datensignalen erfolgt.

20. Sendestation (1) nach Anspruch 19, **dadurch gekennzeichnet, dass** das Filter(15) linear ist.

21. Sendestation (1) nach Anspruch 19 oder 20, **dadurch gekennzeichnet, dass** für jede Empfangsstation (5) ein Filter (15) in der Sendestation (1) vorgesehen ist.

22. Sendestation (1) nach Anspruch 19,20 oder 21, **dadurch gekennzeichnet, dass** das Filter (15) die Datensignale und die Referenzsignale gemeinsam vorentzerrt.

23. Sendestation (1) nach einem der Ansprüche 19 bis 22, **dadurch gekennzeichnet, dass** eine Sendevorrichtung (45) die Datensignale und die Referenzsignale in getrennten Blöcken (70, 75, 80) eines Bursts (120) überträgt.

24. Sendestation (1) nach Anspruch 23, **dadurch gekennzeichnet, dass** das Filter (15) die Vorentzerrung blockweise durchführt, so dass die Blöcke (70, 75, 80) des Bursts (120) getrennt vorentzerrt werden.

25. Sendestation (1) nach Anspruch 23, **dadurch gekennzeichnet, dass** das Filter (15) die Vorentzerrung burstweise durchführt, so dass die Blöcke (70, 75, 80) zusammenhängend vorentzerrt werden.

26. Sendestation (1) nach einem der Ansprüche 19 bis 25, **dadurch gekennzeichnet, dass** der Referenzsignalgenerator (40) für eine erste Empfangsstation (5) ein eigenes Referenzsignal einfügt.

27. Sendestation (1) nach einem der Ansprüche 19 bis 26, **dadurch gekennzeichnet, dass** eine Sendevorrichtung (45) der Sendestation (1) zumindest einen Teil der Datensignale nach ihrer Filterung und vor ihrer Übertragung um mindestens eine Komponente verkürzt.

28. Empfangsstation (5) mit einer Empfangsschaltung (50) für den Empfang von codierten Datensignalen einer Sendestation (1) und mit Mitteln (55, 60) zur Detektion der für die Empfangsstation (5) vorgesehenen Datensignale durch Entspreizung mit einem der Empfangsstation (5) zugeordneten Code, wobei die Mittel (55, 60) einen ersten Detektor (55) zur Durchführung eines Verfahrens zur Entzerrung und Entspreizung der empfangenen und durch, insbesondere lineare, Filterung in der Sendestation (1) vorentzerrten Datensignale, insbesondere mittels eines Rake-Empfängers oder eines Joint Detection Verfahrens, umfassen, **dadurch gekennzeichnet, dass** die Mittel (55, 60) einen zweiten Detektor (60) zur Durchführung eines Verfahrens zur Datendetektion lediglich durch Entspreizung, insbesondere mittels eines Korrelationsempfängers, umfassen, dass eine Auswertevorrichtung (65) vorgesehen ist, die anhand der empfangenen und durch Filterung in der Sendestation (1) vorentzerrten Signale prüft, ob die Signale über mehrere Wege empfangen wurden, dass die Auswertevorrichtung (65) in diesem Fall die Empfangsschaltung (50) mit dem ersten Detektor (55) verbindet und dass andernfalls die Auswertevorrichtung (65) die Empfangsschaltung (50) mit dem zweiten Detektor (60) verbindet.

29. Empfangsstation (5) nach Anspruch 28, **dadurch gekennzeichnet, dass** ein Demultiplexer (90) vorgesehen ist, der aus einem empfangenen Datenstrom Datensignale und Referenzsignale trennt.

30. Empfangsstation (5) nach Anspruch 29, **dadurch gekennzeichnet, dass** ein erster Korrelationsempfänger (20) vorgesehen ist, der die empfangenen Referenzsignale nach dem Demultiplexen mit einem für die Empfangsstation (5) vorgegebenen Referenzsignal korreliert.

31. Empfangsstation (5) nach Anspruch 30, **dadurch gekennzeichnet, dass** eine Synchronisiervorrichtung (95) vorgesehen ist, die den Zeitpunkt des größten Korrelationswertes als Synchronisationszeitpunkt zum Synchronisieren der für die Empfangsstation (5) übertragenden Datensignale auswählt.

32. Empfangsstation (5) nach Anspruch 30 oder 31, **dadurch gekennzeichnet, dass** die Synchronisiervorrichtung (95) die Phase der empfangenen Datensignale an die Phase des größten Korrelationswertes anpasst.

33. Empfangsstation (5) nach Anspruch 30, 31 oder 32, **dadurch gekennzeichnet, dass** der erste Korrelationsempfänger (20) aus den in der ersten Empfangsstation (5) empfangenen Referenzsignalen eine Kanalschätzung des Funkkanals (10) von der Sendestation (1) zur Empfangsstation (5) ableitet.

**34.** Empfangsstation (5) nach Anspruch 33, **dadurch gekennzeichnet, dass** der erste Korrelationsempfänger (20) die Kanalschätzung durch Vergleich der empfangenen Referenzsignale mit dem für die Empfangsstation (5) vorgegebenen Referenzsignal mittels Korrelation ermittelt.

**35.** Empfangsstation (5) nach einem der Ansprüche 28 bis 34, **dadurch gekennzeichnet, dass** die Auswertevorrichtung (65) die Prüfung anhand einer Kanalschätzung des Funkkanals (10) von der Sendestation (1) zu der Empfangsstation, insbesondere durch Auswertung eines auf diesem Funkkanal (10) übertragenen Referenzsignals, durchführt.

**36.** Empfangsstation (5) nach Anspruch 35, **dadurch gekennzeichnet, dass** mittels der Kanalschätzung die Entzerrung der Datensignale im ersten Detektor (55) erfolgt.

**37.** Empfangsstation (5) nach einem der Ansprüche 28 bis 36, **dadurch gekennzeichnet, dass** die Auswertevorrichtung (65) einen Einwegeempfang dann feststellt, wenn innerhalb einer vorgegebenen Zeit in genau einem Pfad i des Funkkanals (10) von der Sendestation (1) zu der Empfangsstation (5) ein vorgegebener Leistungswert

$$\left( c_{crit} \cdot \max_{j \neq i}\left( \left| \hat{h}_j \right|^2 \right) \right)$$ überschritte wird und dass andernfalls ein Mehrwegeempfang festgestellt wird.

## Claims

**1.** Method for transmitting data signals between a transmitting station (1) and a number of receiving stations (5, 6) via radio channels (10), wherein, in the transmitting station (1), the data signals for different receiving stations (5, 6) are spread by means of different codes, wherein the data signals to be transmitted are pre-equalized and wherein the transmission characteristics of all radio channels (10) and all different codes are taken into consideration in the pre-equalization, wherein the data signals to be transmitted are pre-equalized by filtering in the transmitting station (1), **characterized in that** reference signals are transmitted to the various receiving stations (5) at least with a part of the data signals, and, before they are transmitted, are filtered in the same manner as the data signals.

**2.** Method according to Claim 1, **characterized in that** the filtering is performed with a linear filter (15).

**3.** Method according to Claim 1 or 2, **characterized in that** data signals for different receiving stations (5) are differently filtered.

**4.** Method according to one of the preceding claims, **characterized in that** the data signals and the reference signals are jointly pre-equalized.

**5.** Method according to one of the preceding claims, **characterized in that** the data signals and the reference signals are transmitted in separate blocks (70, 75, 80) of a burst (120).

**6.** Method according to Claim 5, **characterized in that** the pre-equalization is performed block by block so that the blocks (70, 75, 80) of the burst (120) are separately pre-equalized.

**7.** Method according to Claim 5, **characterized in that** the pre-equalization is performed burst by bursts so that the blocks (70, 75, 80) are coherently pre-equalized.

**8.** Method according to one of the preceding claims, **characterized in that** a separate reference signal is transmitted for a first receiving station (5).

**9.** Method according to one of the preceding claims, **characterized in that** at least a part of the data signals, after having been filtered and before they are transmitted, is shortened by at least one component.

**10.** Method according to Claim 8 or 9, **characterized in that**, in the first receiving station (5), the received reference signals are correlated with the reference signal predetermined for this receiving station (5) in a first correlation receiver (20).

11. Method according to Claim 10, **characterized in that** the time of the greatest correlation value is used as synchronization time for synchronizing the data signals transmitted for this first receiving station (5).

12. Method according to Claim 10 or 11, **characterized in that** the phase of the received data signals is matched to the phase of the greatest correlation value.

13. Method according to one of Claims 8 to 12, **characterized in that** a channel estimation of the radio channel (10) from the transmitting station (1) to the first receiving station (5) is derived from the reference signals received in the first receiving station (5).

14. Method according to Claim 13, **characterized in that** the channel estimation is determined by means of correlation by comparing the received reference signals with the reference signal predetermined for the first receiving station (5).

15. Method according to Claim 13 or 14, **characterized in that** a method for data detection is selected in dependence on the channel estimation in the first receiving station (5).

16. Method according to Claim 15, **characterized in that** in the first receiving station (5), a check is made whether the data signals have been received via several paths, that in this case, a method for equalization and despreading of the received data signals is applied, particularly by means of a Rake receiver or of a joint detection method and that otherwise a data detection is performed only by despreading, particularly by means of a second correlation receiver (60).

17. Method according to Claim 16, **characterized in that** the method for equalizing and despreading the received data signals is carried out in dependence on a channel estimation performed with the received reference signals.

18. Method according to Claim 16 or 17, **characterized in that** a one-way reception is identified if a predetermined power value $\left( C_{cru} \cdot \max_{j \neq 1} \left( \left| \hat{h}_j \right|^2 \right) \right)$ is exceeded within a predetermined time on precisely one path i of the radio channel (10) from the transmitting station (1) to the corresponding receiving station (5), and that otherwise multipath reception is identified.

19. Transmitting station (1) for transmitting data signals to a number of receiving stations (5) via radio channels (10), wherein the data signals for different receiving stations (5) are spread with different codes, wherein a modulator (30), a code generator (35) and a channel estimator (25) are provided, wherein the modulator (30) performs a spreading of the data signals to be transmitted on the basis of the information from the code generator (35) and wherein a filter (15) is provided by means of which the transmitting station (1) performs a pre-equalization on the basis of the information from the code generator (35) and the channel estimator (25), **characterized in that** a reference signal generator (40) is provided by means of which the transmitting station (1) generates a reference signal at least for one of the receiving stations (5) and that the reference signal is filtered in the same manner as in the case of the data signals to be transmitted to this receiving station (5).

20. Transmitting station (1) according to Claim 19, **characterized in that** the filter (15) is linear.

21. Transmitting station (1) according to Claim 19 or 20, **characterized in that** for each receiving station (5), a filter (15) is provided in the transmitting station (1).

22. Transmitting station (1) according to Claim 19, 20 or 21, **characterized in that** the filter (15) jointly pre-equalizes the data signals and the reference signals.

23. Transmitting station (1) according to one of Claims 19 to 22, **characterized in that** a transmitting device (45) transmits the data signals and the reference signals in separate blocks (70, 75, 80) of a burst (120).

24. Transmitting station (1) according to Claim 23, **characterized in that** the filter (15) performs the pre-equalization block by block so that the blocks (70, 75, 80) of the burst (120) are separately pre-equalized.

25. Transmitting station (1) according to Claim 23, **characterized in that** the filter (15) performs the pre-equalization burst by burst so that the blocks (70, 75, 80) are coherently pre-equalized.

26. Transmitting station (1) according to one of Claims 19 to 25, **characterized in that** the reference signal generator (40) inserts a separate reference signal for a first receiving station (5).

27. Transmitting station (1) according to one of Claims 19 to 26, **characterized in that** a transmitting device (45) of the transmitting station (1) shortens at least a part of the data signals by at least one component after they are filtered and before they are transmitted.

28. Receiving station (5) comprising a receiving circuit (50) for receiving coded data signals from a transmitting station (1) and with means (55, 60) for detecting the data signals provided for the receiving station (5) by despreading by means of a code allocated to the receiving station (5), wherein the means (55, 60) comprise a first detector (55) for performing a method for equalizing and despreading the received data signals pre-equalized by, in particular, linear filtering in the transmitting station (1), particularly by means of a Rake receiver or a joint detection method, **characterized in that** the means (55, 60) comprise a second detector (60) for performing a method for data detection only by despreading, particularly by means of a correlation receiver, that an evaluating device (65) is provided which checks by means of the signals received and pre-equalized by filtering in the transmitting station (1) as to whether the signals have been received by a number of paths, that in this case, the evaluating device (65) connects the receiving circuit (50) to the first detector (55) and that otherwise the evaluating device (65) connects the receiving circuit (50) to the second detector (60).

29. Receiving station (5) according to Claim 28, **characterized in that** a demultiplexer (90) is provided which separates data signals and reference signals from a received data stream.

30. Receiving station (5) according to Claim 29, **characterized in that** a first correlation receiver (20) is provided which correlates the received reference signals, after demultiplexing, with a reference signal predetermined for the receiving station (5).

31. Receiving station (5) according to Claim 30, **characterized in that** a synchronizing device (95) is provided which selects the time of the greatest correlation value as synchronization time for synchronizing the data signals transmitted for the receiving station (5).

32. Receiving station (5) according to Claim 30 or 31, **characterized in that** the synchronizing device (95) matches the phase of the received data signals with the phase of the greatest correlation value.

33. Receiving station (5) according to Claim 30, 31 or 32, **characterized in that** the first correlation receiver (20) derives a channel estimation of the radio channel (10) from the transmitting station (1) to the receiving station (5) from the reference signals received in the first receiving station (5).

34. Receiving station (5) according to Claim 33, **characterized in that** the first correlation receiver (20) determines the channel estimation by means of correlation by comparing the received reference signals with the reference signal predetermined for the receiving station (5).

35. Receiving station (5) according to one of Claims 28 to 34, **characterized in that** the evaluating device (65) performs the check by means of a channel estimation of the radio channel (10) from the transmitting station (1) to the receiving station, particularly by evaluating a reference signal transmitted on this radio channel (10).

36. Receiving station (5) according to Claim 35, **characterized in that** the data signals are equalized in the first detector (55) by means of the channel estimation.

37. Receiving station (5) according to one of Claims 28 to 36, **characterized in that** the evaluating device (65) identifies a one-way reception if a predetermined power value $\left( C_{cru} \cdot \underset{j \neq i}{max} \left( \left| \hat{h}_j \right|^2 \right) \right)$ is exceeded within a predetermined time on precisely one path i of the radio channel (10) from the transmitting station (1) to the receiving station (5) and that otherwise multi-path reception is identified.

**Revendications**

1. Procédé de transmission de signaux de données entre un émetteur (1) et plusieurs récepteurs (5, 6) par des canaux radio (10), l'émetteur (10) étalant les signaux de données avec des codes différents pour les différents récepteurs (5, 6),
on effectue une précorrection des signaux de données à transmettre, en tenant compte des propriétés de transmission de tous les canaux radio (10) et de tous les codes différents, les signaux de données à transmettre étant précorrigés par filtrage dans l'émetteur (1),
**caractérisé en ce que**
au moins avec une partie des signaux de données, on transmet des signaux de référence vers les différents récepteurs (5) et avant leur transmission, on filtre ces signaux de la même manière que les signaux de données.

2. Procédé selon la revendication 1,
**caractérisé en ce qu'**
on effectue le filtrage à l'aide d'un filtre linéaire (15).

3. Procédé selon l'une quelconque des revendications 1 ou 2,
**caractérisé en ce qu'**
on filtre différemment les signaux de données de différents récepteurs (5).

4. Procédé selon l'une quelconque des revendications précédentes,
**caractérisé en ce qu'**
on effectue une précorrection commune des signaux de données et des signaux de référence.

5. Procédé selon l'une quelconque des revendications précédentes,
**caractérisé en ce que**
les signaux de données et les signaux de référence sont transmis dans des blocs distincts (70, 75, 80) d'une salve (120).

6. Procédé selon la revendication 5,
**caractérisé en ce qu'**
on effectue la précorrection par blocs de sorte que les blocs (70, 75, 80) de la salve (120) sont précorrigés de manière séparée.

7. Procédé selon la revendication 5,
**caractérisé en ce que**
la précorrection est effectuée par salve de façon à corriger les blocs (70, 75, 80) qui précédemment étaient liés.

8. Procédé selon l'une quelconque des revendications précédentes,
**caractérisé en ce qu'**
on transmet un signal de référence propre pour le premier récepteur (5).

9. Procédé selon l'une quelconque des revendications précédentes,
**caractérisé en ce qu'**
on raccourcit au moins une partie des signaux de données après leur filtrage et avant leur transmission en supprimant au moins une composante.

10. Procédé selon l'une quelconque des revendications 8 ou 9,
**caractérisé en ce que**
dans le premier récepteur (5) on met en corrélation les signaux de référence reçus dans un premier récepteur à corrélation (20) avec le signal de référence prédéfini pour ce récepteur (5).

11. Procédé selon la revendication 10,
**caractérisé en ce qu'**
on utilise l'instant de la plus grande valeur de corrélation comme instant de synchronisation pour synchroniser les signaux de données transmis au premier récepteur (5).

12. Procédé selon l'une quelconque des revendications 10 ou 11,

EP 1 243 079 B1

**caractérisé en ce qu'**
on adapte la phase des signaux de données reçus à la phase de la plus grande valeur de corrélation.

13. Procédé selon l'une quelconque des revendications 8 à 12,
   **caractérisé en ce qu'**
   à partir des signaux de référence reçus dans le premier récepteur (5), on déduit une évaluation de canal du canal radio (10) et de l'émetteur (1) vers le premier récepteur (5).

14. Procédé selon la revendication 13,
   **caractérisé en ce qu'**
   on détermine l'évaluation de canal par comparaison des signaux de référence reçus avec le signal de référence prédéfini pour le premier récepteur (5) en procédant par corrélation.

15. Procédé selon l'une quelconque des revendications 13 ou 14,
   **caractérisé en ce qu'**
   on sélectionne un procédé de détection de données en fonction de l'évaluation de canal dans la première station de réception (5).

16. Procédé selon la revendication 15,
   **caractérisé en ce que**
   dans le premier récepteur (5), on vérifie si les signaux de données ont été reçus par plusieurs chemins, et dans ce cas, on applique un procédé de correction et d'étalement des signaux de données reçus notamment à l'aide d'un récepteur à râteau ou du procédé de détection de connexion, et dans le cas contraire, on effectue une détection de données uniquement par étalement notamment à l'aide d'un second récepteur à corrélation (60).

17. Procédé selon la revendication 16,
   **caractérisé en ce qu'**
   on effectue le procédé de correction et d'étalement des signaux de données reçus en fonction d'une évaluation de canal effectuée avec les signaux de référence reçus.

18. Procédé selon l'une quelconque des revendications 16 ou 17,
   **caractérisé en ce qu'**
   on constate que la réception se fait par un seul chemin si à l'intérieur d'une durée prédéfinie, dans précisément un chemin du canal radio (10) entre l'émetteur (1) et le récepteur correspondant (5), on dépasse une puissance prédéfinie.

$$\left( \ C_{crit} \cdot \underset{j \neq i}{\max}\left(\left|\hat{h}_j\right|^2\right) \ \right)$$

19. Emetteur (1) pour transmettre des signaux de données vers plusieurs récepteurs (5) par des canaux radio (10) selon lequel les signaux de données sont étalées pour différents récepteurs (5) ayant des codes différents, comprenant un modulateur (30), un générateur de code (35) et un évaluateur de canal (25),
   le modulateur (30) assurant un étalement des signaux de données à transmettre en s'appuyant sur les informations du générateur de code (35), et
   un filtre (15) est prévu avec lequel l'émetteur (1) effectue une précorrection en s'appuyant sur les informations du générateur de code (35) et de l'évaluateur de canal (25),
   **caractérisé par**
   un générateur de signal de référence (40) par lequel l'émetteur (1) génère au moins un signal de référence pour l'un des récepteurs (5), et on filtre le signal de référence de la même manière que les signaux de données transmis à ce récepteur (5).

20. Emetteur (1) selon la revendication 19,
   **caractérisé en ce que**
   le filtre (15) est linéaire.

21. Emetteur (1) selon l'une quelconque des revendications 19 ou 20,

**caractérisé en ce que**
chaque récepteur (5) comporte un filtre (15) dans la station d'émission (1).

22. Emetteur (1) selon l'une quelconque des revendications 19, 20, 21,
**caractérisé en ce que**
le filtre (15) corrige préalablement les signaux de données et les signaux de référence par une correction commune.

23. Emetteur (1) selon l'une quelconque des revendications 19 à 22,
**caractérisé en ce qu'**
un dispositif émetteur (45) transmet les signaux de données et les signaux de référence dans des blocs distincts (70, 75, 80) d'une salve (120).

24. Emetteur (1) selon la revendication 23,
**caractérisé en ce que**
le filtre (15) effectue la précorrection par blocs de sorte que les blocs (70, 75, 80) de la salve (20) soient corrigés séparément.

25. Emetteur (1) selon la revendication 23,
**caractérisé en ce que**
le filtre (15) effectue la précorrection par salve (120) pour corriger les blocs (70, 75, 80) de manière cohérente.

26. Emetteur (1) selon l'une quelconque des revendications 19 à 25,
**caractérisé en ce que**
le générateur de signal de référence (40) insère son propre signal de référence.

27. Emetteur (1) selon l'une quelconque des revendications 19 à 26,
**caractérisé en ce qu'**
un dispositif émetteur (45) de la station (1) raccourcit au moins une partie des signaux de données après leur filtrage et avant leur transmission, le raccourcissement concernant au moins un composant.

28. Récepteur (5) comportant un circuit de réception (50) pour recevoir des signaux de données, codés, venant d'un émetteur (1) ainsi que des moyens (55, 60) pour détecter les signaux de données destinés au récepteur (5) par étalement à l'aide d'un code associé au récepteur (5), les moyens (55, 60) comprenant un premier détecteur (55) pour effectuer un procédé de correction et d'étalement des signaux de données reçus, précorrigés notamment par filtrage linéaire dans la station d'émission (1), en particulier avec un récepteur à râteau ou un procédé de détection de connexion,
**caractérisé en ce que**
les moyens (55, 60) comprennent un second détecteur (60) pour appliquer un procédé de détection de données uniquement par étalement notamment à l'aide d'un récepteur à corrélation, et un dispositif d'exploitation (65) qui, à l'aide des signaux reçus et précorrigés par filtrage dans la station d'émission (1), vérifie si les signaux ont été reçus par plusieurs chemins, le dispositif d'exploitation (65) reliant dans ce cas le circuit de réception (50) au premier détecteur (55) et dans le cas contraire, il relie le circuit de réception (50) au second détecteur (60).

29. Récepteur (5) selon la revendication 28,
**caractérisé par**
un démultiplexeur (90) qui sépare les signaux de données et les signaux de référence du flux de données, reçu.

30. Récepteur (5) selon la revendication 29,
**caractérisé par**
un premier récepteur à corrélation (20) qui fait la corrélation entre les signaux de réception reçus après le démultiplexage et un signal de référence pour le récepteur (5).

31. Récepteur (5) selon la revendication 30,
**caractérisé par**
une installation de synchronisation (95) qui sélectionne l'instant de la plus grande valeur de corrélation comme instant de synchronisation pour synchroniser les signaux de données transmis au récepteur (5).

32. Récepteur (5) selon l'une quelconque des revendications 30 ou 31,

**caractérisé en ce que**
le dispositif de synchronisation (95) adapte la phase des signaux de données reçus à la phase de la plus grande valeur de corrélation.

33. Récepteur (5) selon l'une quelconque des revendications 30, 31, 32,
**caractérisé en ce que**
le premier récepteur à corrélation (20) déduit une évaluation du canal radio (10) pour l'émetteur (1) vers le récepteur (5) à partir des signaux de référence reçus dans le premier récepteur (5).

34. Récepteur (5) selon la revendication 33,
**caractérisé en ce que**
le premier récepteur à corrélation (20) détermine l'évaluation de canal en comparant les signaux de référence reçus, au signal de référence prédéfini pour le récepteur (5) en procédant par corrélation.

35. Récepteur (5) selon l'une quelconque des revendications 28 à 34,
**caractérisé en ce que**
le dispositif d'exploitation (65) fait la vérification à l'aide d'une évaluation du canal radio (10) par l'émetteur (1) vers le récepteur notamment en exploitant un signal de référence transmis par ce canal radio (10).

36. Récepteur (5) selon la revendication 35,
**caractérisé en ce qu'**
on effectue la correction des signaux de données dans le premier détecteur (55) à l'aide de l'évaluation de canal.

37. Récepteur (5) selon l'une quelconque des revendications 28 à 36,
**caractérisé en ce que**
le dispositif d'exploitation (65) constate qu'il y a une réception par un seul chemin si à l'intérieur d'une période donnée dans précisément un chemin (i) du canal radio (10), l'émetteur (1) vers le récepteur (5) dépasse une puissance prédéfinie,

$$\left( C_{crit} \cdot \underset{j \neq i}{max} \left( \left| \hat{h}_j \right|^2 \right) \right)$$

et dans le cas contraire, on constate qu'il y a une réception à plusieurs chemins.

Fig.1

Fig.2

Fig.3

Fig.4

$$\frac{\max}{j \ne i}(|\hat{h}_j|^2)$$

Fig.5